# EUROPEAN PATENT APPLICATION

(11) **EP 2 070 811 A1**
(43) Date of publication of application: **17.06.2009**
(21) Application number: 07024160.9
(22) Date of filing: 12.12.2007
(51) Int. Cl.: B62K 25/08

(54) **Device having inner member only moving relative to outer member but rotating**

(71) Applicant: J.D Components Co., Ltd., Shou Shui Hsiang, Chang Hua Hsien (TW)
(72) Inventor: Lee, Yuan-Kuei, Taichung County 438 (TW)
(74) Representative: Straus, Alexander

(57) **Abstract**

A device (10) includes a first movable member (12) having at least a slot (124) on an inner wall thereof; a second movable member (14) provided in the first movable member (12); a sliding sleeve (16), which has at least a recess (162), provided between the first movable member (12) and the second movable member (14); and at least a rolling member (18) received in the recess (162) of the sliding sleeve (16) and contacting an inner wall of the slot (124) of the first movable member (12) and an outer wall of the second movable member (14). Whereby, the second movable member (14) can not rotate relative to the first movable member (12) and only can move relative to the first movable member (12).

## Description

### BACKGROUND OF THE INVENTION

### 1. Field of the Invention

The present invention relates to a motion mechanism, and more particularly to a device having an inner member and an outer member, wherein the inner member may move relative to the outer member but rotate.

### 2. Description of the Related Art

In prior art, to have a relative motion between two members, it usually provides a linear bearing between the members that one member may moves smoothly relative to the other. When the members are round, these two members may have rotation.

However, when such device allowing movement and rotation is incorporated in a shock absorbing front fork and a base tube of a bicycle, it may cause danger to rider. Therefore, it usually provides a device between the front fork and the base tube that allows relative movement between the front fork and the base but rotation.

Taiwan patent M271791 discloses a vertical shock absorbing front fork, which includes an inner tube, an outer tube fitted to the inner tube, a sleeve between the inner tube and the outer tube, and a tube in the outer tube. The tube and the inner tube are provided with four slots respectively, and on the inner side and the outer side of the sleeve have four blocks respectively that the blocks are received in the slots of the inner tube and the tube respectively when the tube is provided on a top of the inner tube. With the engagements of the blocks and the slots, the outer tube and the tube may move relative to the inner tube but rotate.

However, the aspects of the blocks and the slots are elongated that there are large contact areas between blocks and the slots to affect movement and to generate friction causing damage. Therefore, the sleeve, the tube, and (or) inner tube may be damaged for a time of use and need replacement that increases the cost.

### SUMMARY OF THE INVENTION

The primary objective of the present invention is to provide a device, which allows a smooth relative movement between two member but rotation.

The secondary objective of the present invention is to provide a device, which generates a small friction between the members while movement to prolong the products life and to decrease the cost.

The other objective of the present invention is to provide a device, which may be incorporated in the various products.

According to the objectives of the present invention, a device includes a first movable member having at least a slot on an inner wall thereof; a second movable member provided in the first movable member; a sliding sleeve, which has at least a recess, provided between the first movable member and the second movable member; and at least a rotting member received in the recess of the sliding sleeve and contacting an inner wall of the slot of the first movable member and an outer wall of the second movable member. Whereby, the second movable can not rotate relative to the first movable member and only can move relative to the first movable member.

Therefore, with the actions of the sliding sleeve and the rolling member, the second movable member is prevented from rotating relative to the first movable member, and is allowed to move relative to the first movable member. Besides, while the second movable member is moving relative to the first movable member, the rolling member keeps rolling to continuously change the contact portions of the rolling member contacting the inner wall of the slot of the first movable member and the outer wall of the second movable member that the elements of the present invention will have less wearing after a long time of use to lower the cost.

### BRIEF DESCRIPTION OF THE DRAWINGS

FIG 1 is a sectional view of a first embodiment of the present invention;
FIG 2 is a sectional view along the 3-3 line of FIG. 1;
FIG 3 is a sectional view of the first embodiment of the present invention after relative movement;
FIG. 4 is a sectional view of a second embodiment of the present invention;
FIG 5 is an exploded view of the second embodiment of the present invention;
FIG 6 is a sectional view along the 6-6 line of FIG 4;
FIG 7 is a perspective view, showing the second embodiment of the present invention incorporated in the shock absorbing front fork of a bicycle;
FIG 8 is a sectional view of the second embodiment of the present invention after compression;
FIG 9 is a sectional view of a third embodiment of the present invention; and
FIG 10 is a sectional view of another aspect of the third embodiment of the present invention.

### DETAILED DESCRIPTION OF THE INVENTION

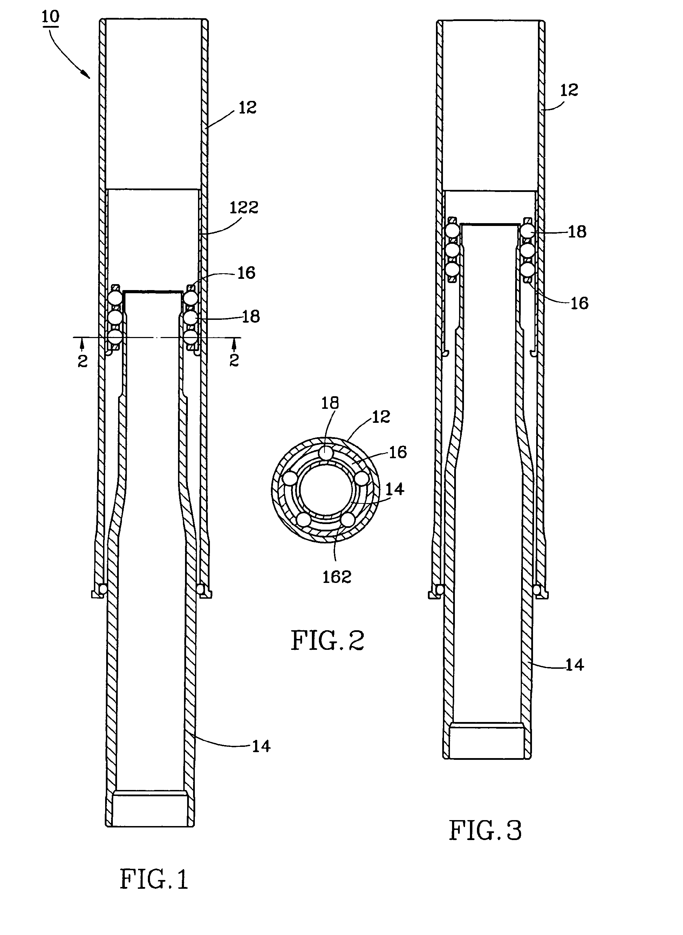

As shown in FIG 1 and FIG 2, a device 10 of the first embodiment of the present invention includes a first movable member 12, a second movable member 14, a sliding sleeve 16, and a plurality of rolling members 18.

The first movable member 12, which is a tubular member, is fixed with a tube 122 at an inner side thereof. The tube 122 has a plurality of slots 124.

The second movable member 14, which may be a tubular member or a shaft, is inserted into the first movable member 12.

The sliding sleeve 16, which has a plurality of recesses 162, is between the tube 122 of the first movable member 12 and the second movable member 14.

The rolling members 18 are balls in the present invention received in the recesses 162 of the sliding member 16 to be against inner walls of the slots 124 of the tube 122 and an outer wall of the second movable member 14 respectively.

With the structure as described above, as shown in FIG 3, when the second movable member 14 is moved upwards relative to the first movable member 12, the outer wall of the second movable member 14 will move the rolling members 18 to slide in the slots 124 that will move the sliding sleeve 16 upwards.

Therefore, the present invention provides the slots 124 and the rolling members 18 to stop the second movable member 14 rotating relative to the first movable member 12 and to allow the second movable member 14 moving relative to the first movable member 12. While the second movable member 14 is moving relative to the first movable member 12, the rolling members 18 keep rolling to change the contact portions of the rolling members 18 and the inner walls of the slots 124 of the first movable member 12 and the outer wall of the second movable member 14 that decreases the wearing of the rolling member 18 and the inner walls of the slots 124 and lowers the cost.

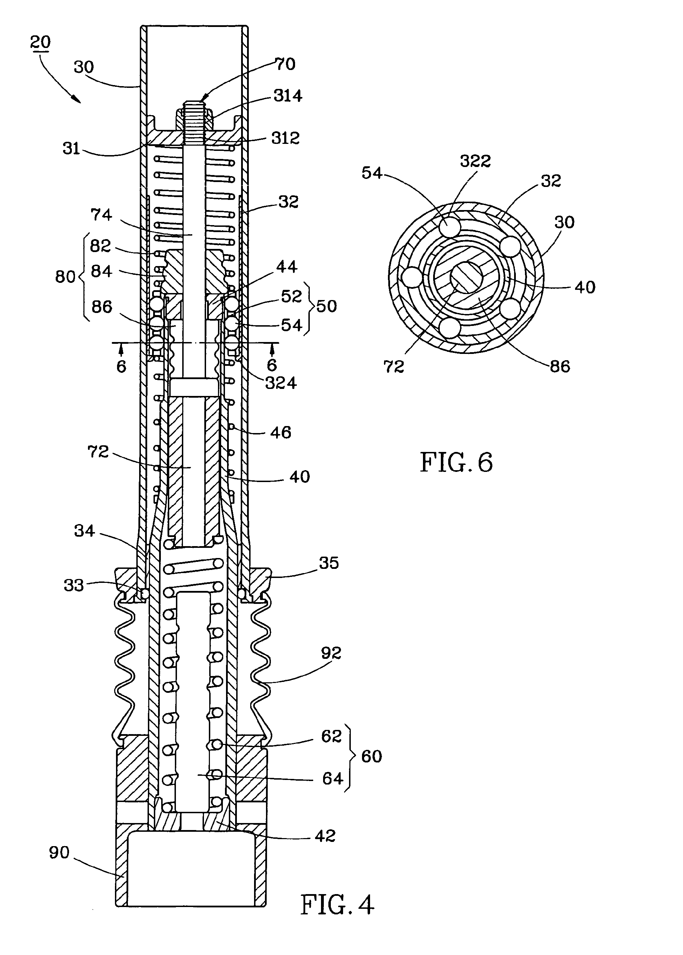

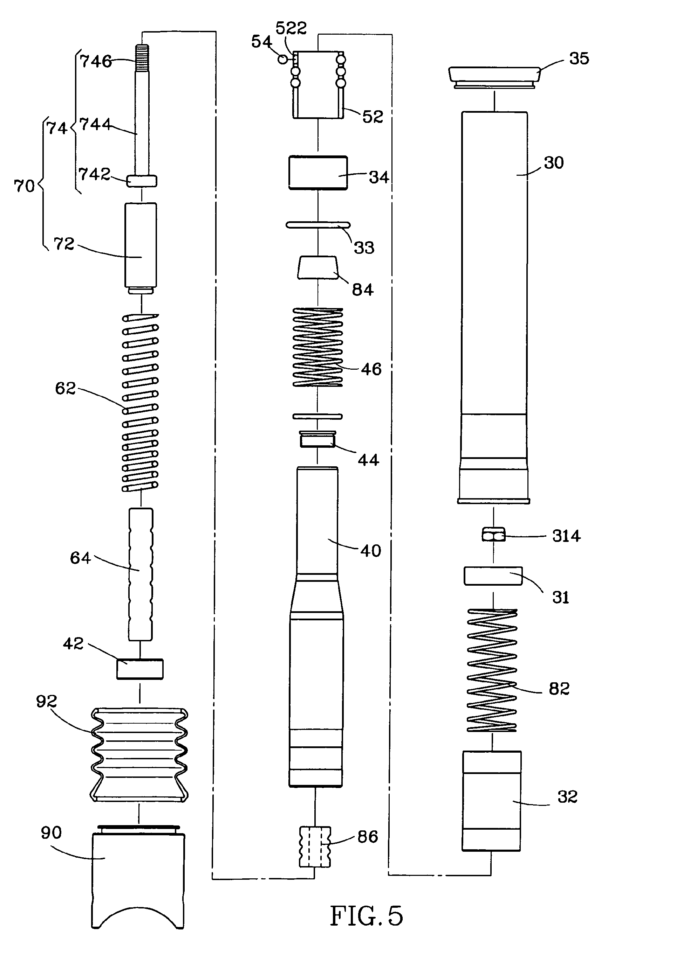

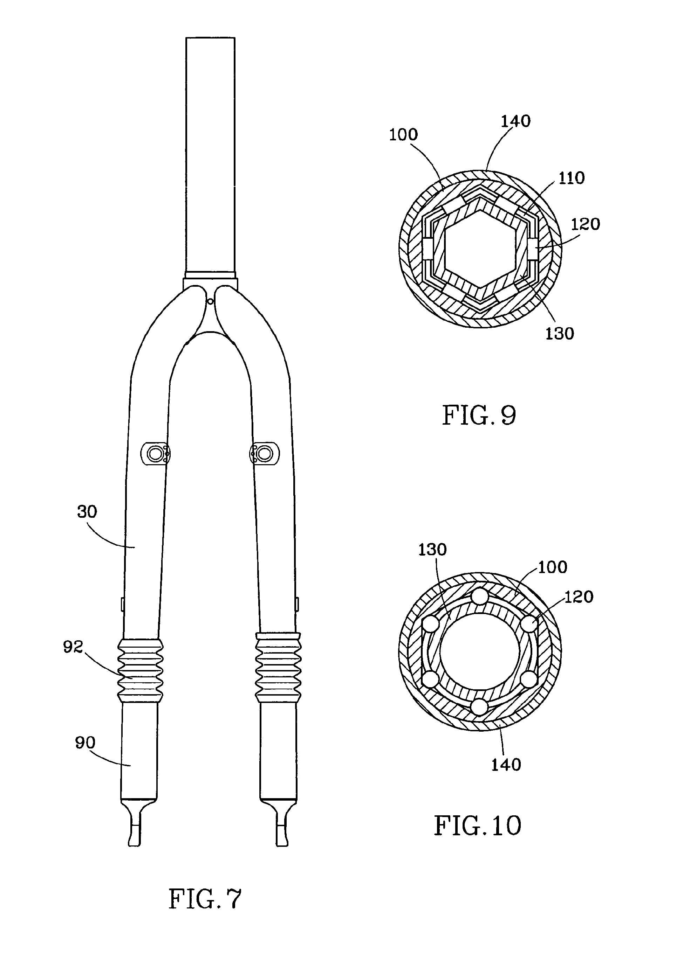

As shown in FIG 4 and FIG 5, a device 20 of the second embodiment of the present invention is incorporated in a shock absorbing front fork or a base tube of a bicycle. In this embodiment, the device 20 is incorporated in the shock absorbing front fork. As shown in FIG 7, the device 20 includes an outer tube 30, an inner tube 40, a guiding unit 50, a first cushion unit 60, a guiding shaft 70, and a second cushion unit 80.

The outer tube 30 has a plug 31 therein and adjacent to a top thereof. The plug 31 has a threaded hole 312 and a first nut 314 above the threaded hole 312. A tube 32 is fixed to an inner wall of the outer tube 30 under the plug 31. The tube 32 has a plurality of slots 322 and a stop portion 324 at a bottom end thereof, as shown in FIG 6. In addition, the outer tube 30 is provided with an O ring 33 and a bearing 34 on the inner wall of the bottom end. The bearing 34 is above the O ring 33 and touches the O ring 33. The outer tube 30 further is fitted with a protective tube 35 on the bottom end thereof.

The inner tube 40 is thinner from a bottom end to a top end. The inner tube 40 defines an upper section, a middle section, and a bottom section, wherein a diameter of the upper section is smaller than that of the middle section, and the diameter middle section is smaller than that of the bottom section. A second nut 42 is fixed at the bottom end of the inner tube 40 to connect a sleeve tube 90. A dust-proof sleeve 92 is mounted between the sleeve tube 90 and the protective tube 35 of the outer tube 30 to isolate dust. The top end of the inner tube 40 is inserted into the outer tube 30 and is provided with a third nut 44. The O ring 33 presses an outer wall of the bottom section of the inner tube 40, and an elastic member 46, a spring is shown in drawings, is fitted to the inner tube 40 at the upper section and the middle section.

As shown in FIG. 6, the guiding unit 50 includes a sliding sleeve 52 and a plurality of rolling members 54. The sliding sleeve 52 is received in the tube 32 with a bottom end against the stop portion 324 and the elastic member 46. The stop portion 324 may prevent the sliding sleeve 52 from escaping the tube 32. The sliding sleeve 52 has a plurality of recesses 522, as shown in FIG 5, each of which is associated with the slots 322 respectively, the rolling members 54 are balls in the present embodiment to be received in the recesses 522 and against an inner wall of the slots 322 of the tube 32 and an outer wall of the inner tube 40 that the outer tube 30 and the tube 32 may move relative to the inner tube 40 but can not rotate.

The first cushion unit 60 includes a first compression spring 62 and a cushion rubber 64 received in the first compression spring 62. The first compression spring 62 and the cushion rubber 64 are received in the inner tube 40 with both bottom ends thereof against the second nut 42.

The guiding shaft 70 has an inner shaft 72 and a worm shaft 74. The inner shaft 72 has a bottom end against a top end of the first compression spring 62 and a top end against a head portion 742 of the worm shaft 74. The worm shaft 74 further has a body portion 744 connecting the head portion 742. A third nut 44, the plug 31, and the first nut 314 are fitted to the body portion 744 in sequence and screwed with a threaded section 746 thereon.

The second cushion unit 80 includes a second compression spring 82, a cushion member 84, and a flexible member 86. The second compression spring 82 has its opposite ends urging the plug 31 and the top end of the sliding sleeve 52. The cushion member 84 is fitted to the body portion 744 of the worm shaft 74 above the third nut 44. The flexible member 86 is fitted to the body portion 744 of the worm shaft 74 between the third nut 44 and the head portion 742 of the worm shaft 74.

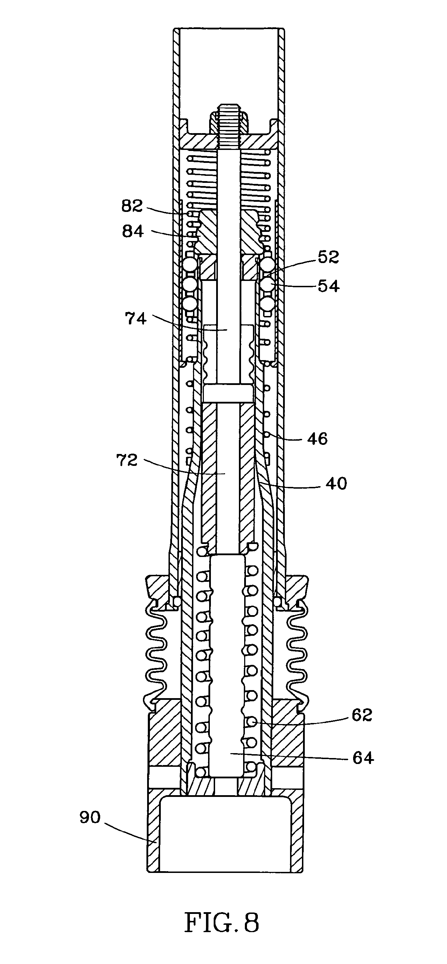

When the bicycle equipped with the present invention runs on a rough road, as shown in FIG. 8, the inner tube 40 will be moved upwards relative to the outer tube 30. While the inner tube 40 is moving upwards, the elastic member 46 will be compressed by the inner tube 40 to absorb the impact on the inner tube 40, and the outer wall of the inner tube 40 will drive the rolling members 54 in the slots rolling to simultaneously move the sliding sleeve 52 upwards. Therefore, the sliding sleeve 52 compresses the second compression spring 80 to give the inner tube a counter force. In addition, in the upward movement of the inner tube 40, the first compression spring 62 and the cushion rubber 64 will be compressed by the sleeve tube 90 to push the inner shaft 72 and the warm shaft 74 that makes the cushion member 84 deformed to help impact absorbing. As a result, the bicycle equipped with the present invention will gain a well shock absorbing function. Besides, when the inner tube 40 moves relative to the outer tube 30, the rolling members 54 keep rolling in the slots 54 that the contact portions of the rolling members 54 and the inner walls of the slots 322 and the outer wall of the inner tube 40 change continuously. As a result, the contact portions of the present invention is much less than that of the blocks and slots of the conventional device that less wearing will be occurred in the present invention for a long time of contact.

Therefore, the present invention provides the first cushion unit 60 and the second cushion unit 80 to provide the bicycle a well shock absorbing function, beside that, while the inner tube 40 is moving relative to the outer tube 30, the rolling members 54 in the slots 322 and the sliding sleeve 52 may help decreasing the friction, and the tube 32, the inner tube 40 and the rolling members 54 will have less wearing for a long time of use to achieve the objective of lowering the cost. Besides, it is very easy to assemble the sliding sleeve 52.

As shown in FIG. 9, it shows the third embodiment of the present invention, which is similar to the second embodiment, except that:

In the present embodiment, a tube 100 is a hexagonal member, a sliding sleeve 110 is a hexagonal member also, and rolling member 120 are posts. The rolling members 120 contacts both of an inner wall of the tube 100 and an outer wall of an inner shaft 130 that the inner shaft 130 can not rotates relative to an outer tube 140 also. It only allows the inner shaft 130 moving relative to the outer tube 140. Besides, as shown in FIG. 10, it shows another aspect of the present embodiment, in which the rolling members are balls on corners of the tubes 100 and contacting the inner shaft 130 that may stop the inner shaft 130 rotating relative to the outer tube 140 and only allow a movement of the inner shaft 130 relative to the outer tube 140 to achieve the objective of the present invention.

The description above is a few preferred embodiments of the present invention and the equivalence of the present invention is still in the scope of the claim of the present invention.

## Claims

1. A device (10), comprising:
a first movable member (12) having at least a slot (124) on an inner wall thereof; and
a second movable member (14) provided in the first movable member (12);
**characterized in that** said device (10) comprises:
a sliding sleeve (16), which has at least a recess (162), provided between the first movable member (12) and the second movable member (14); and
at least a rolling member (18) received in the recess (162) of the sliding sleeve (16) and contacting an inner wall of the slot (124) of the first movable member (12) and an outer wall of the second movable member (14) whereby the second movable (14) can not rotate relative to the first movable member (12) and only can move relative to the first movable member (12).

2. The device (10) as defined in claim 1, **characterized in that** the first movable member (12) has a tube (122), on which the slot (124) is provided, on an inner wall thereof.

3. The device (10) as defined in claim 1, **characterized in that** the rolling member (18) is a ball.

4. A device (20), comprising:
an outer tube (30); and
an inner tube (40) provided in the outer tube(30);
**characterized in that** said device (20) comprises:
a guiding unit (50) provided between the inner tube (40) and the outer tube (30) to allow the inner tube (40) moving relative to the outer tube (30) but rotating;
a first cushion unit (60) provided in the inner tube (40); and
a second cushion unit (80) provided between the inner tube (40) and the outer tube (30), wherein when the inner tube (40) moves upwards relative to the outer tube (30), the first cushion unit (60) will be compressed and push the second cushion unit (80) through the guiding unit (50) to compress the second cushion unit (80), and when the inner tube (40) moves downwards relative to the outer tube (30), the first cushion unit (60) and the second cushion unit (80) return their initial conditions.

5. The device (20) as defined in claim 4, **characterized in that** the outer tube (30) has a tube (32), which has at least a slot (322), on an inner wall thereof, and the guiding unit (50) has a sliding sleeve (52), which is received in the tube (32), having at least a recess (522) and at least a rolling member (54) received in the recess (522) of the sliding sleeve (52) contacting an outer wall of the inner tube (40) and an inner wall of the slot (322)of the tube (32), and the second cushion unit (80) contacts a top of the sliding sleeve (52).

6. The device (20) as defined in claim 5, **characterized in that** the rolling member (54) is a ball.

7. The device (20) as defined in claim 5, **characterized in that** the tube (32) has a stop portion (324) contacting a bottom of the sliding sleeve (52) to prevent the sliding sleeve (52) and the rolling member (54) from escaping the tube (32).

8. The device (20) as defined in claim 5, **characterized in that** the inner tube (40) has an elastic member (46) fitted to the inner tube (40) and contacting the bottom of the sliding sleeve (52).

9. The device (20) as defined in claim 5, **characterized in that** the outer tube (30) has a plug (31) therein, and the second cushion unit (80) is provided between the plug (31) and the sliding sleeve (52).

10. The device (20) as defined in claim 9, **characterized by** further comprising an inner shaft (72) and a worm shaft (74), wherein the outer tube (30) has a nut (314), and the inner shaft (72) is received in the inner tube (40) with opposite ends contacting the first cushion unit (60) and the worm shaft (74), and the worm shaft (74) passes through the plug (31) to be screwed into the nut (314).

11. The device (20) as defined in claim 4, **characterized in that** the outer tube (30) has an O ring (33) and a bearing (34), both of which are fixed in the outer tube (30) at a bottom end thereof, and the inner tube (40) is inserted into the outer tube (30) to contact the O ring (33) and the bearing (34).

12. A device, comprising:
an outer tube (140) having a non-circular cross-section; and
an inner shaft (130) provided in the outer tube (140);
**characterized in that** said device comprises:
a sliding sleeve (110) provided between the outer tube (140) and the inner shaft (130), wherein the sliding sleeve (110) has a cross-section complementary to the outer tube(140); and
at least a rolling member (120) provided on the sliding sleeve (110) and contacting an inner wall of the outer tube (140) and an outer wall of the inner shaft (130) to prevent the inner shaft (130) from rotating relative to the outer tube (140) but allow the inner shaft (130) moving relative to the outer tube (140).

13. The device as defined in claim 12, **characterized in that** the outer tube (140) has a tube (100) on the inner wall thereon, and the tube (100) has a non-circular cross-section.

14. The device as defined in claim 13, **characterized in that** both of the tube (100) and the sliding sleeve (110) have polyhedral cross-sections.

15. The device as defined in claim 12, **characterized in that** the rolling member (120) is a ball.

16. The device as defined in claim 12, **characterized in that** the rolling member (120) is a post.
